# EUROPÄISCHE PATENTANMELDUNG

(11) **EP 3 376 024 A1**
(43) Veröffentlichungstag der Anmeldung: **19.09.2018**
(21) Anmeldenummer: 17160506.6
(22) Anmeldetag: 13.03.2017
(51) Int. Cl.: F03D 1/06

(54) **TEILBARES WINDENERGIEANLAGENROTORBLATT MIT BOLZENVERBINDUNG**

(71) Anmelder: Nordex Energy GmbH, 22419 Hamburg (DE)
(72) Erfinder: Rauter, Natalie, 21031 Hamburg (DE); Nies, Daniel, 22159 Hamburg (DE); Nickel, Andreas, 22765 Hamburg (DE)
(74) Vertreter: Hauck Patentanwaltspartnerschaft mbB

(57) **Zusammenfassung**

Windenergieanlagenrotorblatt, das in Längsabschnitte teilbar ist, wobei zwei Längs-abschnitte durch mindestens einen Bolzen miteinander verbunden sind und jeweils ein in Längsrichtung des Windenergieanlagenrotorblatts verlaufendes Holmelement aus einem faserverstärkten Kunststoffmaterial aufweisen, wobei der mindestens eine Bolzen durch Öffnungen in einander überlappenden Abschnitten der beiden Holmelemente hindurchgeführt ist, wobei mindestens einer der Abschnitte eine Metallschicht aufweist, die die Öffnung in diesem Abschnitt ringförmig umgibt und fest mit dem faserverstärkten Kunststoffmaterial des Holmelements verbunden ist, so dass eine Mantelfläche der Öffnung teilweise von der Metallschicht und teilweise von dem faserverstärkten Kunststoffmaterial des Abschnitts gebildet ist.

## Beschreibung

Die Erfindung betrifft ein in Längsabschnitte teilbares Windenergieanlagenrotorblatt. Die Möglichkeit, Windenergieanlagenrotorblätter in Längsabschnitte zu teilen, gewinnt mit den immer größer werdenden Abmessungen der Windenergieanlagenrotorblätter an Bedeutung. Ein zentraler Vorteil ist die Vereinfachung des Transports vom Ort der Fertigung zum Errichtungsort der Windenergieanlage. Die Verbindung der Längsabschnitte miteinander muss dauerhaft höchste Festigkeitsanforderungen erfüllen. Gleichzeitig soll die Verbindung mit möglichst einfachen Mitteln auf der Baustelle möglich sein.

Es sind ganz unterschiedliche Lösungsansätze für die Verbindung der Längsabschnitte vorgeschlagen worden, beispielsweise ein Verkleben der Längsabschnitte miteinander oder ein Verspannen mit Hilfe von Seilen. Ebenfalls bekannt ist eine Verbindung der Längsabschnitte mittels Bolzen.

Beispielsweise schlägt die Druckschrift EP 2 252 790 B1 vor, einen Verbindungsabschnitt eines Holms des blattspitzenseitigen Längsabschnitts in einen Holmkasten des blattwurzelseitigen Längsabschnitts einzusetzen und die überlappend angeordneten Abschnitte der Holme mit konischen Bolzen zu verbinden. Öffnungen der Laminate der Abschnitte werden hierzu in spezielle Buchsen aus Metall eingefasst, die konische Bohrung aufweisen, in die die Bolzen eingesetzt werden.

Aus der Druckschrift DE 10 2014 118 004 B3 ist ein geteiltes Windenergieanlagenrotorblatt bekannt geworden, bei dem ebenfalls ein hervorstehender Abschnitt eines Holms eines blattspitzenseitigen Längsabschnitts in einen Holmkasten des blattwurzelseitigen Längsabschnitts eingesetzt wird. Bei dieser Lösung werden Bolzen durch Öffnungen in einander überlappenden Stegabschnitten hindurchgeführt. Um Toleranzen ausgleichen zu können, liegen die Stegabschnitte nicht unmittelbar aneinander an. Stattdessen werden Gleitbuchsen in die Öffnungen eingesetzt und die Bolzen werden durch die Gleitbuchsen hindurchgeführt. Dann werden zunächst die Gleitbuchsen mit dem Bolzen miteinander verspannt. Anschließend werden die Gleitbuchsen in den Öffnungen der Stegabschnitte festgesetzt, in einem Ausführungsbeispiel mit Hilfe von Spannbuchsen.

Davon ausgehend ist es die Aufgabe der Erfindung, ein in Längsabschnitte teilbares Windenergieanlagenrotorblatt mit einander überlappenden, mit einem Bolzen miteinander verbundenen Abschnitten von Holmelementen zur Verfügung zu stellen, bei dem eine festere und dauerhaftere Verbindung erzielt wird.

Diese Aufgabe wird gelöst durch das Windenergieanlagenrotorblatt mit den Merkmalen des Anspruchs 1. Vorteilhafte Ausgestaltungen sind in den Unteransprüchen angegeben.

Das Windenergieanlagenrotorblatt ist in Längsabschnitte teilbar, wobei zwei Längsabschnitte durch mindestens einen Bolzen miteinander verbunden sind und jeweils ein in Längsrichtung des Windenergieanlagenrotorblatts verlaufendes Holmelement aus einem faserverstärkten Kunststoffmaterial aufweisen, wobei der mindestens eine Bolzen durch Öffnungen in einander überlappenden Abschnitten der beiden Holmelemente hindurchgeführt ist, wobei mindestens einer der Abschnitte eine Metallschicht aufweist, die die Öffnung in diesem Abschnitt ringförmig umgibt und fest mit dem faserverstärkten Kunststoffmaterial des Holmelements verbunden ist, sodass eine Mantelfläche der Öffnung teilweise von der Metallschicht und teilweise von dem faserverstärkten Kunststoffmaterial des Abschnitts gebildet ist.

Das Windenergieanlagenrotorblatt kann in zwei oder mehr Längsabschnitte unterteilt sein. Die Holmelemente bestehen aus einem faserverstärkten Kunststoffmaterial und bilden eine zentrale Tragstruktur der jeweiligen Längsabschnitte bzw., wenn sie miteinander verbunden sind, des gesamten Windenergieanlagenrotorblatts. Die zu verbindenden Abschnitte der Holmelemente weisen Öffnungen auf, die zylindrisch, insbesondere kreiszylindrisch sein können. Die überlappende Anordnung der Abschnitte der beiden Holmelemente kann insbesondere dadurch erreicht werden, dass eines der Holmelemente aus einer Teilungsebene, in der aerodynamische Hüllen der beiden Längsabschnitte aneinander grenzen, hervorsteht. Dieser hervorstehende Abschnitt des Holmelements des einen Längsabschnitts kann in eine korrespondierende Öffnung des anderen Längsabschnitts bzw. des Holmelements des anderen Längsabschnitts eingesetzt werden. Bevorzugt weist derjenige Längsabschnitt das hervorstehende Holmelement auf, der näher an der Blattspitze angeordnet ist.

Die Erfindung beruht auf der Erkenntnis, dass die in den überlappenden Abschnitten angeordneten Öffnungen in dem faserverstärkten Kunststoffmaterial der Holmelemente besonders großen Belastungen ausgesetzt sind. Um im Bereich der Öffnungen Kräfte in die Holmelemente einleiten zu können, müssen die Öffnungen sehr präzise auf die Anordnung und Größe der in die Öffnungen eingesetzten Verbindungsmittel abgestimmt sein. In Anbetracht der üblichen Fertigungstoleranzen ist es daher in der Regel nicht möglich, die Öffnungen vorzufertigen. Einfacher ist es, die Öffnungen nach der Vorfertigung der Längsabschnitte einzubringen, nachdem die beiden Längsabschnitte in die zusammengefügte Anordnung gebracht worden sind. Das Einsetzen von speziellen Metallbuchsen, wie in der Druckschrift EP 2 252 790 B1 vorgeschlagen, ist daher kaum praktikabel.

Bei der Erfindung ist vorgesehen, die Abschnitte im Bereich der Öffnung mit einer Metallschicht zu verstärken. Diese Metallschicht ist fest mit dem faserverstärkten Kunststoffmaterial des Holmelements verbunden. Es ist dann möglich, die beiden Längsabschnitte wie gewohnt zunächst in ihre zusammengefügte Anordnung zu bringen und dann die Öffnungen durch die Abschnitte hindurch herzustellen. Anschließend werden die Mantelflächen der Öffnungen teilweise von dem faserverstärkten Kunststoffmaterial des Abschnitts, teilweise von der Metallschicht gebildet, wobei die Metallschicht die Öffnung ringförmig umgibt. Genau gesagt wird die Mantelfläche einer Öffnung von den zu der Öffnung weisenden Stirnseiten des faserverstärkten Kunststoffmaterials und der Metallschicht des Holmelements gebildet. Durch die Metallschicht wird die Lochleibungsfestigkeit der Öffnung gesteigert. Es kommt ein direkter Kontakt zwischen zwei Metallteilen zustande, sodass nicht ausschließlich das wesentlich nachgiebigere, faserverstärkte Kunststoffmaterial mit dem Metall des Bolzens oder eines sonstigen, in die Öffnung eingesetzten Metallelements zusammenwirkt. Dadurch können im Bereich der Öffnung von dem Bolzen oder einem sonstigen, in die Öffnung eingesetzten Verbindungselement dauerhaft größere Kräfte in die überlappenden Abschnitte eingebracht werden.

Ein weiterer Vorteil ist, dass die Metallschicht die unter Belastung auftretenden Verformungen der Abschnitte verringert, sodass angrenzende Verklebungen entlastet werden.

In einer Ausgestaltung ist eine Spannbuchse in die von der Metallschicht umgebene Öffnung eingesetzt und mit der Mantelfläche der Öffnung verspannt, wobei der Bolzen durch die Spannbuchse hindurchgeführt ist. Spannbuchsen, die gelegentlich auch als Spannsätze bezeichnet werden, zeichnen sich durch die Möglichkeit aus, ihren Außendurchmesser zu vergrößern und/oder ihren Innendurchmesser zu verkleinern, sodass sie mit einem durch die Spannbuchse hindurchgeführten Element und/oder mit einer Öffnung, in die die Spannbuchse eingesetzt ist, verspannt werden können. Spannbuchsen werden häufig für Welle-Nabe-Verbindungen eingesetzt. Spannbuchsen können einen Außenring und einen Innenring aufweisen, die an konisch ausgebildeten Flächen zusammenwirken. Mittels Schrauben können Innen- und Außenring miteinander verspannt werden, wodurch es zu der beschriebenen Vergrößerung bzw. Verkleinerung der jeweiligen Durchmesser kommt. Alternativ können zwischen Innen- und Außenring weitere Elemente angeordnet sein, die konische Flächen aufweisen und bei der Verspannung derart mit Innen- und Außenring zusammenwirken, dass es zu der beschriebenen Durchmesseränderung kommt. Bei der Erfindung sorgt die Spannbuchse für eine kraftschlüssige Verbindung mit dem Abschnitt des Holmelements, in dessen Öffnung sie eingesetzt ist. Durch die einen Teil der Mantelfläche dieser Öffnung bildende Metallschicht wird vermieden, dass es beim Verspannen der Spannbuchse in der Öffnung zu Beschädigungen des Laminats des Abschnitts des Holmelements kommt, insbesondere durch Delamination. Durch den Einsatz der Metallschicht kann insgesamt ein höheres Radialvorspannungsniveau erreicht werden, was einen sichereren Kraftschluss ermöglicht. Gleichzeitig hat das höhere Radialvorspannungsniveau den Vorteil, ein Klaffen zwischen der Mantelfläche der Öffnung und der Spannbuchse hin zu größeren Belastungen zu verlagern.

In einer Ausgestaltung ist zwischen der Spannbuchse und dem Bolzen eine Gleitbuchse angeordnet, die mit der Spannbuchse verspannt ist. Dadurch kann bei der Montage zunächst durch Anziehen des Bolzens eine Vorspannung auf die Gleitbuchse aufgebracht werden. Anschließend kann die Gleitbuchse mit Hilfe der Spannbuchse axial in der Öffnung des Abschnitts festgelegt werden.

In einer Ausgestaltung ist die Metallschicht mit dem faserverstärkten Kunststoffmaterial des Abschnitts des Holmelements verklebt. Diese Verklebung kann nach dem Aushärten des faserverstärkten Kunststoffmaterials ausgeführt oder in den Herstellungsprozess des faserverstärkten Kunststoffmaterials einbezogen werden, beispielsweise durch Integrieren der Metallschicht in einen Vakuuminfusionsaufbau.

In einer Ausgestaltung ist die Metallschicht mit dem faserverstärkten Kunststoffmaterial des Abschnitts des Holmelements verschraubt. Hierzu können Gewindebolzen durch die Metallschicht und das faserverstärkte Kunststoffmaterial des Abschnitts, in einem Abstand von der Öffnung, hindurchgeführt werden. Die Festigkeit der Verbindung zwischen Metallschicht und faserverstärktem Kunststoffmaterial kann dadurch gesteigert werden.

In einer Ausgestaltung weist der Abschnitt des Holmelements mindestens eine weitere Metallschicht auf, die die Öffnung ebenfalls ringförmig umgibt und einen Teil der Mantelfläche der Öffnung bildet. Abhängig von der Dicke der Metallschicht und der weiteren Metallschicht kann dadurch eine weitere Steigerung der Festigkeit im Bereich der Mantelfläche der Öffnung erzielt werden. Anzahl und Dicke der Metallschichten können beispielsweise so gewählt werden, dass der Anteil der Mantelfläche der Öffnung, der von den Metallschichten gebildet ist, im Bereich von etwa 10 % bis etwa 60 % liegt.

In einer Ausgestaltung ist die Metallschicht und/oder die weitere Metallschicht an einer Außenseite des Abschnitts des Holmelements angeordnet. Insbesondere können zwei Metallschichten an einander gegenüberliegenden Außenseiten des Abschnitts angeordnet sein. Durch die Anordnung einer Metallschicht an einer Außenseite wird einer Delamination des faserverstärkten Kunststoffmaterials unter Belastung besonders effektiv entgegengewirkt.

In einer Ausgestaltung weisen die Metallschicht und/oder die mindestens eine weitere Metallschicht eine zur Mantelfläche der Öffnung hin zunehmende Dicke auf. Grundsätzlich können die Metallschichten eine über ihre gesamte Fläche gleichmäßige Dicke aufweisen. Diese Dicke kann beispielsweise im Bereich von 0,25 mm bis 5 mm liegen. Durch Vergrößern der Dicke zur Öffnung hin kann eine besonders wirksame Verstärkung im Bereich der Öffnung bei gleichzeitig optimaler Krafteinleitung in das faserverstärkte Kunststoffmaterial erreicht werden.

In einer Ausgestaltung sind die Metallschicht und/oder die mindestens eine weitere Metallschicht kreisförmige oder ovale Platten, in deren Mitte die Öffnung angeordnet ist. Grundsätzlich können die Metallschichten eine beliebige Form aufweisen. Die genannte Formgebung vermeidet Steifigkeitssprünge in den Hauptbelastungsrichtungen.

In einer Ausgestaltung weist die Öffnung zwei Längsabschnitte auf, zwischen denen eine Stufe ausgebildet ist, an der die Spannbuchse anliegt. Dies kann bei der Montage eine korrekte Positionierung der Spannbuchse in der Öffnung vereinfachen. Der Durchmesser der Öffnung ändert sich an der Stufe, wobei die Mantelfläche, die mit der Spannbuchse verspannt ist, in einem ersten Längsabschnitt der Öffnung ausgebildet ist, in dem der Öffnungsdurchmesser an den Außendurchmesser der Spannbuchse angepasst ist. Dieser Längsabschnitt kann sich über einen Großteil der Gesamtlänge der Öffnung erstrecken, beispielsweise über 80 % oder mehr davon. Auf der anderen Seite der Stufe verbleibt ein zweiter Längsabschnitt der Öffnung, indem der Öffnungsdurchmesser geringer ist. Dieser zweite Längsabschnitt erstreckt sich über einen entsprechend geringeren Anteil der Gesamtlänge der Öffnung.

In einer Ausgestaltung ist die Stufe innerhalb der Metallschicht oder der mindestens einen weiteren Metallschicht angeordnet. Dadurch weist die Öffnung im Bereich des an der Stufe anliegenden Endes der Spannbuchse eine hohe Festigkeit auf, sodass es beim Verspannen der Spannbuchse nicht zu Beschädigungen kommt.

In einer Ausgestaltung weisen die beiden Holmelemente jeweils zwei Stege auf, wobei die beiden Stege des einen Holmelements zwischen den beiden Stegen des anderen Holmelements angeordnet sind und der mindestens eine Bolzen durch Öffnungen in allen vier Stegen hindurchgeführt ist. Die jeweils zwei Stege jedes Holmelements können mit zwei Gurten des jeweiligen Holmelements einen Holmkasten bilden. Die Gurte können in zwei Halbschalen des betreffenden Längsabschnitts des Rotorblatts integriert oder damit verbunden sein. Insbesondere können die beiden Stege des einen Holmelements zu einem blattspitzenseitigen Längsabschnitt gehören, in dem der Holmkasten kleinere Abmessungen aufweist, als in dem anderen Längsabschnitt. In diesem Fall ist das Einsetzen der Stege des einen Holmelements zwischen den beiden Stegen des anderen Holmelements besonders vorteilhaft.

Nachfolgend wird die Erfindung anhand von Figuren näher erläutert. Alle Figuren zeigen vereinfachte, schematische Darstellungen. Es zeigen:
- Fig.1: eine schematische Ansicht eines Windenergieanlagenrotorblatts mit Blickrichtung auf die Saugseite,
- Fig. 2: eine Schnittdarstellung des Windenergieanlagenrotorblatts aus Fig. 1 entlang der mit A-A bezeichneten Ebene,
- Fig. 3: einen Teil des Windenergieanlagenrotorblatts aus Fig. 1 in einer teilweise geschnittenen Darstellung mit Blickrichtung auf die Profilnasenkante,
- Fig. 4: eine in eine Öffnung eines Stegs eingesetzte Spannbuchse in einer Schnittdarstellung,
- Fig. 5: eine Draufsicht auf die Anordnung aus Fig. 4,
- Fig. 6: vier über einen Bolzen miteinander verbundene Stege in einer Darstellung mit Blickrichtung entsprechend der Figur 1,
- Fig. 7: vier über einen Bolzen miteinander verbundene Stege, ebenfalls dargestellt mit Blickrichtung entsprechend der Figur 1.

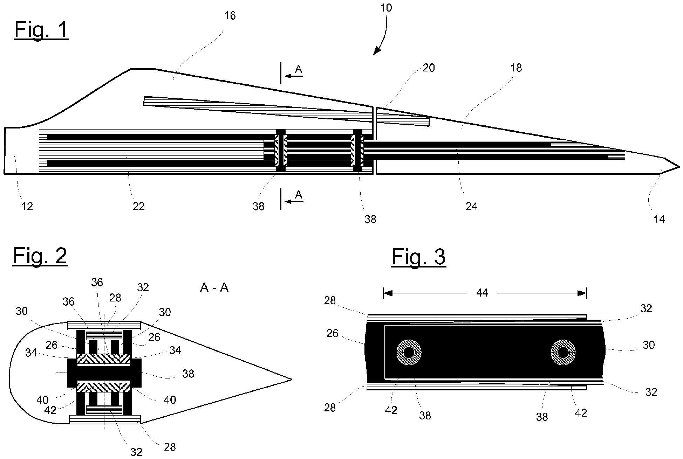

Zunächst wird der Grundaufbau eines erfindungsgemäßen, geteilten Windenergieanlagenrotorblatts 10 anhand der Figuren 1 bis 3 erläutert. Das Windenergieanlagenrotorblatt 10 hat eine Blattwurzel 12 und eine Blattspitze 14. Es ist in einen ersten Längsabschnitt 16, der die Blattwurzel 12 umfasst, und einen zweiten Längsabschnitt 18, der die Blattspitze 14 umfasst, geteilt. Die beiden Längsabschnitte 16, 18 stoßen in einer Teilungsebene 20 aneinander. Die Teilungsebene 20 verläuft durch eine aerodynamische Hülle des Windenergieanlagenrotorblatts 10 in einer Profilebene.

Ein Holmelement 22 des ersten Längsabschnitts 16 verläuft in Längsrichtung des Windenergieanlagenrotorblatts 10 und endet an der Teilungsebene 20. Ein Holmelement 24 des zweiten Längsabschnitts 18 verläuft ebenfalls in Längsrichtung des Windenergieanlagenrotorblatts. Es steht aus der Teilungsebene 20 hervor und erstreckt sich in das Holmelement 22 des ersten Längsabschnitts 16 hinein.

Das Holmelement 22 des ersten Längsabschnitts 16 weist zwei Stege 26 und zwei Gurte 28 auf, die einen Holmkasten bilden. Die Anordnung dieser Stege und Gurte ist am besten in der Figur 2 erkennbar. Das Holmelement 24 des zweiten Längsabschnitts 18 weist ebenfalls zwei Stege 30 und zwei Gurte 32 auf, die einen Holmkasten mit kleineren Abmessungen bilden. Der aus der Teilungsebene 20 hervorstehende Abschnitt dieses Holmelements 24 ist innerhalb des von den Stegen 26 und Gurten 28 des Holmelements 22 gebildeten Holmkastens angeordnet. Jeweils ein Steg 26 des Holmelements 22 des ersten Längsabschnitts 16 und ein Steg des Holmelements 24 des zweiten Längsabschnitts 18 sind dabei parallel und in einem Abstand voneinander angeordnet.

Einander überlappende Abschnitte der Holmelemente 22, 24 bzw. der von diesen Holmelementen umfassten Stege 26 bzw. 30 weisen jeweils eine Öffnung 34 bzw. 36 auf, durch die ein Bolzen 38 hindurchgeführt ist. Der Bolzen 38 weist eine nicht im Einzelnen dargestellte Mutter auf und verspannt drei Gleitbuchsen 40, 42 miteinander, die in die Öffnungen 34 bzw. 36 eingesetzt sind. Die Gleitbuchsen 40 sind jeweils in einer der Öffnungen 34 angeordnet und weisen eine Länge auf, die etwas größer ist als die Materialstärke der Stege 26. Die Gleitbuchse 42 weist eine größere Länge auf und verläuft durch die beiden Öffnungen 36 in den Stegen 30 hindurch.

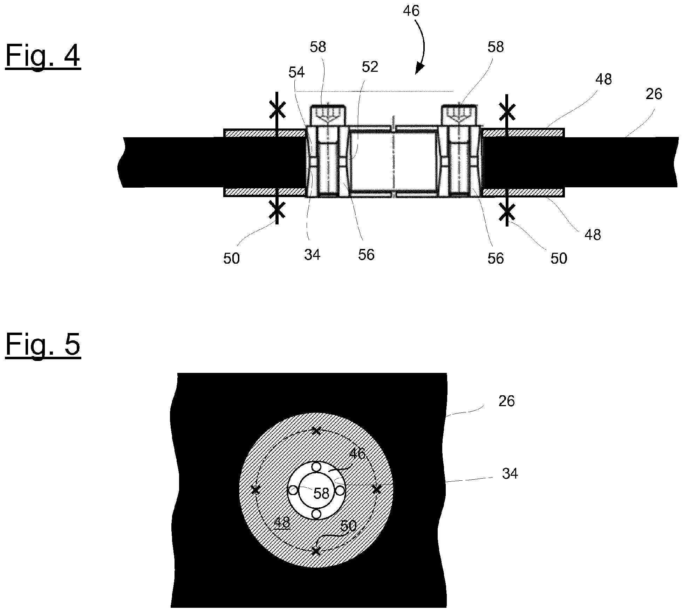

In der Ansicht der Figur 3 erkennt man besonders gut die einander überlappenden Abschnitte der Holmelemente 22 und 24, die von den Stegen 26 bzw. 30 gebildet sind. Man erkennt, dass die einander überlappenden Abschnitte eine Länge 44 aufweisen, die beispielsweise im Bereich von 1 m bis 10 m liegen kann. An jedem Ende des überlappenden Abschnitts 44 ist ein Bolzen 38 eingesetzt, wie anhand der Figur 2 erläutert. Die Figuren 1 bis 3 zeigen die erfindungsgemäßen Metallschichten nicht. Ihre Anordnung wird anhand der Detaildarstellungen der Figuren 4 bis 7 erläutert. Figur 4 zeigt einen Ausschnitt eines Stegs 26 mit einer Öffnung 34. In die Öffnung 34 ist eine Spannbuchse 46 eingesetzt. Der Steg 26 weist im Bereich der Öffnung 34 zwei mit seinen Außenseiten verklebte Metallschichten 48 auf, die die Öffnung 34 ringförmig umgeben. Diese Metallschichten 48 sind zusätzlich über schematisch angedeutete, durch die Metallschichten 48 und das faserverstärkte Kunststoffmaterial des Stegs 26 hindurchgeführte Schrauben 50 befestigt.

Die Spannbuchse 46 weist einen Innenring 52 und einen Außenring 54 auf, die einander zugewandte, konische Mantelflächen aufweisen. Zwischen Innenring 52 und Außenring 54 sind weitere Spannbuchsenelemente 56 mit konischen Flächen angeordnet, die mittels Schrauben 58 miteinander verspannt werden, wodurch sich der Durchmesser des Außenrings 54 vergrößert und der Durchmesser des Innenrings 52 verkleinert. Somit ist die Spannbuchse 46 mit der Mantelfläche der zylindrischen Öffnung 34 verspannt. Man erkennt, dass die Mantelfläche teilweise von den Metallschichten 48, teilweise von dem faserverstärkten Kunststoffmaterial des Stegs 26 gebildet ist.

Figur 5 zeigt eine weitere Ansicht der Elemente aus Figur 4, in der man erkennt, dass die Metallschichten 48 als kreisförmige Platten ausgebildet sind, die die Öffnung 34 ringförmig umgeben.

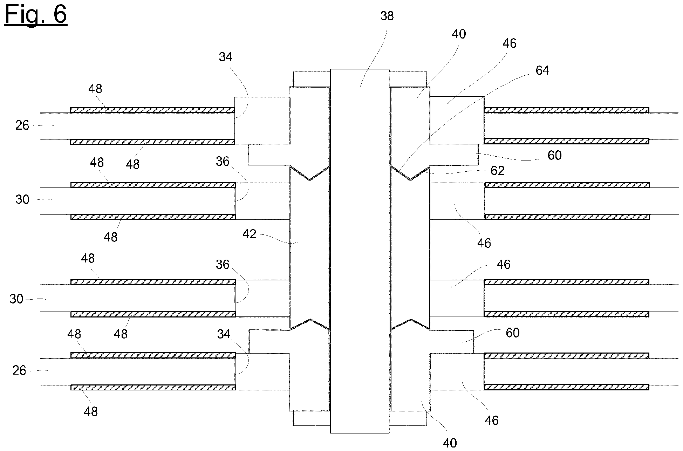

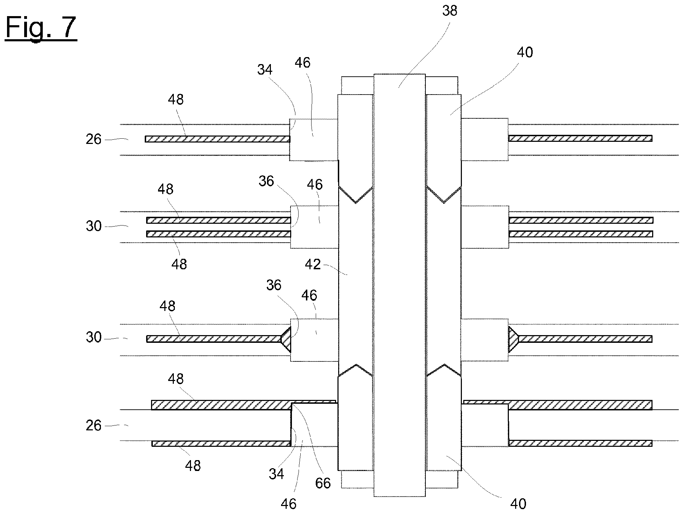

Die Figuren 6 und 7 zeigen jeweils vier über einen Bolzen 38 miteinander verbundene Stege 26, 30. Anhand jedes gezeigten Stegs 26, 30 werden unterschiedliche Ausführungen der Metallschichten 48 erläutert. Es versteht sich, dass diese Ausführungen nicht in der in den Figuren 6 und 7 dargestellten Weise miteinander kombiniert werden müssen. Insbesondere können alle in einem Windenergieanlagenrotorblatt 10 verwendeten Stege 26, 30 hinsichtlich der Metallschichten 48 dieselbe Ausführung aufweisen. Ebenfalls möglich ist die Verwendung unterschiedlicher Ausführungen der Metallschichten 48, wobei die beiden Stege 26 bzw. 30 jedes der Holmelemente 22, 24 bevorzugt dieselbe Ausführung aufweisen.

Die in der Figur 6 gezeigten vier Stege 26 bzw. 30 weisen jeweils zwei Metallschichten 48 auf, die an gegenüberliegenden Außenseiten der jeweiligen Stege 26 angeordnet sind. In der Öffnung 34 des in der Figur 6 ganz oben dargestellten Stegs 26 findet eine Spannbuchse 46 Verwendung, deren Länge etwas größer ist als die Materialstärke des Stegs 26 einschließlich der beiden Metallschichten 48. In diese Spannbuchse 46 ist eine Gleitbuchse 40 eingesetzt, die einen radial nach außen weisenden Flansch 60 aufweist, der das korrekte Einsetzen der Spannbuchse 46 in die Öffnung 34 erleichtert. Der Flansch 60 ist an einer Innenseite des Stegs 26 angeordnet, also innerhalb des von den Stegen 26 abgeschlossenen Holmkastens.

Eine weitere Besonderheit der Gleitbuchse 40 im obersten Steg 26 ist eine an der unteren Stirnseite schematisch dargestellte Profilierung 62, die ringförmig umläuft und mit einer komplementär ausgebildeten Profilierung 64 der Gleitbuchse 42 zusammenwirkt. Beim Verspannen der Gleitbuchsen 40, 42 miteinander mit Hilfe des Bolzens 38 bewirken diese Profilierungen 62, 64 eine Ausrichtung der Gleitbuchsen 40, 42 relativ zueinander in radialer Richtung.

Der Steg 30, der in der Figur 6 an zweiter Position von oben dargestellt ist, wirkt mit einer in seine Öffnung 36 eingesetzten Spannbuchse 46 zusammen, deren Länge im Wesentlichen der Materialstärke des Stegs 30 einschließlich der beiden Metallschichten 48 entspricht. Der an dritter Stelle von oben in der Figur 6 dargestellte Steg 30 ist ebenso ausgebildet, wie der an zweiter Stelle dargestellte Steg 30. Die beiden Stege 30 halten mit den beiden in ihre Öffnungen 34 eingesetzten Spannbuchsen 46 gemeinsam die Gleitbuchse 42, die den Abstand zwischen den beiden Stegen 30 überbrückt.

Der in der Figur 6 ganz unten dargestellte Steg 26 wirkt ebenfalls mit einer Spannbuchse 46 zusammen, deren Länge der Materialstärke des Stegs 26 einschließlich der beiden Metallschichten 48 entspricht. Diese Spannbuchse 46 liegt ebenfalls an einem nach außen weisenden Flansch 60 der zugehörigen Gleitbuchse 40 an.

In der Figur 7 weist nur der ganz unten dargestellte Steg 26 zwei an seinen Außenseiten angeordnete Metallschichten 48 auf. Eine Besonderheit besteht darin, dass die in diesem Steg 26 ausgebildete Öffnung 34 eine Stufe 66 aufweist, an der die Spannbuchse 26 anliegt. Diese Stufe 66 ist innerhalb einer der Metallschichten 48 angeordnet, die zu diesem Zweck eine größere Dicke aufweist als die gegenüberliegend angeordnete Metallschicht 48. Die Öffnung 34 in dem in der Figur 7 ganz unten dargestellten Steg 26 weist somit zwei Längsabschnitte auf, von denen der die Spannbuchse 46 aufnehmende Längsabschnitt sich über einen Großteil der Gesamtlänge der Öffnung 34 erstreckt.

Die drei weiteren, in der Figur 7 dargestellten Stege weisen sämtlich eine oder mehrere im Inneren des faserverstärkten Kunststoffmaterials des jeweiligen Stegs 26, 30 angeordnete Metallschichten 48 auf. Diese Metallschichten 48 können insbesondere in den Herstellungsprozess des faserverstärkten Kunststoffmaterials des jeweiligen Stegs 26, 30 einbezogen werden, indem sie in einen Vakuuminfusionsaufbau integriert werden. Hierzu können sie zwischen entsprechende Fasermateriallagen eingelegt werden.

Der in der Figur 7 ganz oben gezeigte Steg 26 weist nur eine einzige Metallschicht 48 auf, die etwa mittig in dem faserverstärkten Kunststoffmaterial des Stegs 26 angeordnet ist. Die Spannbuchse 46, die mit der Öffnung 34 dieses Stegs 26 zusammenwirkt, weist eine etwas größere Länge auf als die Öffnung 34.

Dies ist auch bei dem Steg 30, der in der Figur 7 an zweiter Stelle von oben gezeigt ist, der Fall. Ein Unterschied besteht jedoch darin, dass innerhalb des Stegs 30 zwei parallel angeordnete Metallschichten 48 angeordnet sind.

In dem an dritter Stelle von oben dargestellten Steg 30 gibt es lediglich eine einzige Metallschicht 48, deren Dicke sich zur Öffnung 36 hin jedoch vergrößert. Dadurch wird ein größerer Anteil der Mantelfläche der Öffnung 36 von der Metallschicht 48 gebildet.

### Liste der verwendeten Bezugszeichen:

- 10: Windenergieanlagenrotorblatt
- 12: Blattwurzel
- 14: Blattspitze
- 16: erster Längsabschnitt
- 18: zweiter Längsabschnitt
- 20: Teilungsebene
- 22: Holmelement des ersten Längsabschnitts
- 24: Holmelement des zweiten Längsabschnitts
- 26: Stege des Holmelements des ersten Längsabschnitts
- 28: Gurte des Holmelements des ersten Längsabschnitts
- 30: Stege des Holmelements des zweiten Längsabschnitts
- 32: Gurte des Holmelements des zweiten Längsabschnitts
- 34: Öffnungen der Stege 26
- 36: Öffnungen der Stege 30
- 38: Bolzen
- 40: Gleitbuchsen
- 42: Gleitbuchse
- 44: Länge der überlappenden Abschnitte
- 46: Spannbuchse
- 48: Metallschicht
- 50: Schrauben
- 52: Innenring
- 54: Außenring
- 56: Spannbuchsenelemente
- 58: Schrauben
- 60: Flansch
- 62: Profilierung
- 64: Profilierung
- 66: Stufe

## Patentansprüche

1. Windenergieanlagenrotorblatt (10), das in Längsabschnitte (16, 18) teilbar ist, wobei zwei Längsabschnitte (16, 18) durch mindestens einen Bolzen (38) miteinander verbunden sind und jeweils ein in Längsrichtung des Windenergieanlagenrotorblatts (10) verlaufendes Holmelement (22, 24) aus einem faserverstärkten Kunststoffmaterial aufweisen, wobei der mindestens eine Bolzen (38) durch Öffnungen (34, 36) in einander überlappenden Abschnitten der beiden Holmelemente (22, 24) hindurchgeführt ist, **dadurch gekennzeichnet, dass** mindestens einer der Abschnitte eine Metallschicht (48) aufweist, die die Öffnung (34, 36) in diesem Abschnitt ringförmig umgibt und fest mit dem faserverstärkten Kunststoffmaterial des Holmelements (22, 24) verbunden ist, so dass eine Mantelfläche der Öffnung (34, 36) teilweise von der Metallschicht (48) und teilweise von dem faserverstärkten Kunststoffmaterial des Abschnitts gebildet ist.

2. Windenergieanlagenrotorblatt (10) nach Anspruch 1, **dadurch gekennzeichnet, dass** in die von der Metallschicht (48) umgebene Öffnung (34, 36) eine Spannbuchse (46) eingesetzt und mit der Mantelfläche der Öffnung (34, 36) verspannt ist, wobei der Bolzen (38) durch die Spannbuchse (46) hindurchgeführt ist.

3. Windenergieanlagenrotorblatt (10) nach Anspruch 2, **dadurch gekennzeichnet, dass** zwischen der Spannbuchse (46) und dem Bolzen (38) eine Gleitbuchse (40, 42) angeordnet ist, die mit der Spannbuchse (46) verspannt ist.

4. Windenergieanlagenrotorblatt (10) nach einem der Ansprüche 1 bis 3, **dadurch gekennzeichnet, dass** die Metallschicht (48) mit dem faserverstärkten Kunststoffmaterial des Abschnitts des Holmelements (22, 24) verklebt ist.

5. Windenergieanlagenrotorblatt (10) nach einem der Ansprüche 1 bis 4, **dadurch gekennzeichnet, dass** die Metallschicht (48) mit dem faserverstärkten Kunststoffmaterial des Abschnitts des Holmelements (22, 24) verschraubt ist.

6. Windenergieanlagenrotorblatt (10) nach einem der Ansprüche 1 bis 5, **dadurch gekennzeichnet, dass** der Abschnitt des Holmelements (22, 24) mindestens eine weitere Metallschicht (48) aufweist, die die Öffnung (34, 36) ebenfalls ringförmig umgibt und einen Teil der Mantelfläche der Öffnung (34, 36) bildet.

7. Windenergieanlagenrotorblatt (10) nach einem der Ansprüche 1 bis 6, **dadurch gekennzeichnet, dass** die Metallschicht (48) und/oder die weitere Metallschicht (48) an einer Außenseite des Abschnitts des Holmelements (22, 24) angeordnet ist.

8. Windenergieanlagenrotorblatt (10) nach einem der Ansprüche 1 bis 7, **dadurch gekennzeichnet, dass** die Metallschicht (48) und/oder die mindestens eine weitere Metallschicht (48) zwischen zwei Schichten aus dem faserverstärkten Kunststoffmaterial des Abschnitts angeordnet ist.

9. Windenergieanlagenrotorblatt (10) nach einem der Ansprüche 1 bis 8, **dadurch gekennzeichnet, dass** die Metallschicht (48) und/oder die mindestens eine weitere Metallschicht (48) eine zur Mantelfläche der Öffnung (34, 36) hin zunehmende Dicke aufweisen.

10. Windenergieanlagenrotorblatt (10) nach einem der Ansprüche 1 bis 9, **dadurch gekennzeichnet, dass** die Metallschicht (48) und/oder die mindestens eine weitere Metallschicht (48) kreisförmige oder ovale Platten sind, in deren Mitte die Öffnung (34, 36) angeordnet ist.

11. Windenergieanlagenrotorblatt (10) nach einem der Ansprüche 1 bis 10, **dadurch gekennzeichnet, dass** die Öffnung (34, 36) zwei Längsabschnitte aufweist, zwischen denen eine Stufe (66) ausgebildet ist, an der die Spannbuchse (46) anliegt.

12. Windenergieanlagenrotorblatt (10) nach Anspruch 11, **dadurch gekennzeichnet, dass** die Stufe (66) innerhalb der Metallschicht (48) oder der mindestens einen weiteren Metallschicht (48) angeordnet ist.

13. Windenergieanlagenrotorblatt (10) nach einem der Ansprüche 1 bis 12, **dadurch gekennzeichnet, dass** die beiden Holmelemente (22, 24) jeweils zwei Stege (26, 30) aufweisen, wobei die beiden Stege (30) des einen Holmelements (24) zwischen den beiden Stegen (26) des anderen Holmelements (22) angeordnet sind und der mindestens eine Bolzen (38) durch Öffnungen (34, 36) in allen vier Stegen (26, 30) hindurchgeführt ist.
